Europäisches Patentamt

**European Patent Office**

**Office européen des brevets**

(11) Publication number: **0 170 055**
**A1**

## (12) EUROPEAN PATENT APPLICATION

(21) Application number: **85107927.7**

(22) Date of filing: **26.06.85**

(51) Int. Cl.⁴: **F 16 M 11/14**
**G 06 F 1/00**

(30) Priority: **02.07.84 US 627022**

(43) Date of publication of application:
**05.02.86 Bulletin 86/6**

(84) Designated Contracting States:
**BE DE FR GB NL SE**

(71) Applicant: BURROUGHS CORPORATION (a Michigan corporation)
Burroughs Place
Detroit, Michigan 48232(US)

(72) Inventor: Lake, Ralph Jones, Jr.
35 S. Branch Rd.
Somerville New Jersey 08876(US)

(72) Inventor: Bakthavachalam, Nanjappa
403 Bigley Road
Neshanic Station New Jersey 08853(US)

(74) Representative: Eisenführ & Speiser
Martinistrasse 24
D-2800 Bremen 1(DE)

(54) **Mounting arrangement for display terminal.**

(57) A data display terminal including a cabinet (20) having a base (30) and containing a cathode ray tube and various other mechanical and electronic components. The cabinet has a spherical section (40) formed in the base, and the spherical section is seated on a pedestal (50) on which the cabinet can tilt and swivel. The spherical section is formed in the base with its center (70) at the center of gravity of the cabinet and all of the parts it contains.

**FIG.1.**

-1-

MOUNTING ARRANGEMENT
FOR DISPLAY TERMINAL

BACKGROUND OF THE INVENTION

Data display terminals include a cabinet which contains, among other things, a cathode ray tube (CRT), a fan, mounting hardware, and various circuit modules which process electrical signals for display on the CRT. At the present time, one form of cabinet includes in its bottom surface a portion of a sphere, known as a spherical section, which is seated in a corresponding concave depression in a base for supporting the terminal so that it can tilt and swivel. In some assemblies, springs are included to support the cabinet during tilting to prevent the cabinet from tilting over. In other assemblies where springs are not used, the units are not balanced in all positions, which means that the units are not stable in all positions. In order to maintain stability, they rely on high frictional forces which make the units harder to tilt and swivel. In addition, excessive frictional forces cause considerable amount of wear on the contact surfaces.

The present invention provides a terminal cabinet which can be tilted and swiveled without springs being required to balance it. The tilt and swivel forces are minimized to such an extent that the operator can move the unit with ease. This is achieved by placing the center of rotation of the cabinet at its center of gravity.

DESCRIPTION OF THE DRAWINGS

Fig. 1 is a side elevational view, partly in section, of a terminal embodying the invention; and

Fig. 2 is a plan view of a portion of the apparatus of the invention.

DESCRIPTION OF THE INVENTION

A data display terminal 10 embodying the invention includes a cabinet 20 containing, among other things, a cathode ray tube, hardware, various circuit boards, and wiring, all of which contribute to the mass of the terminal.

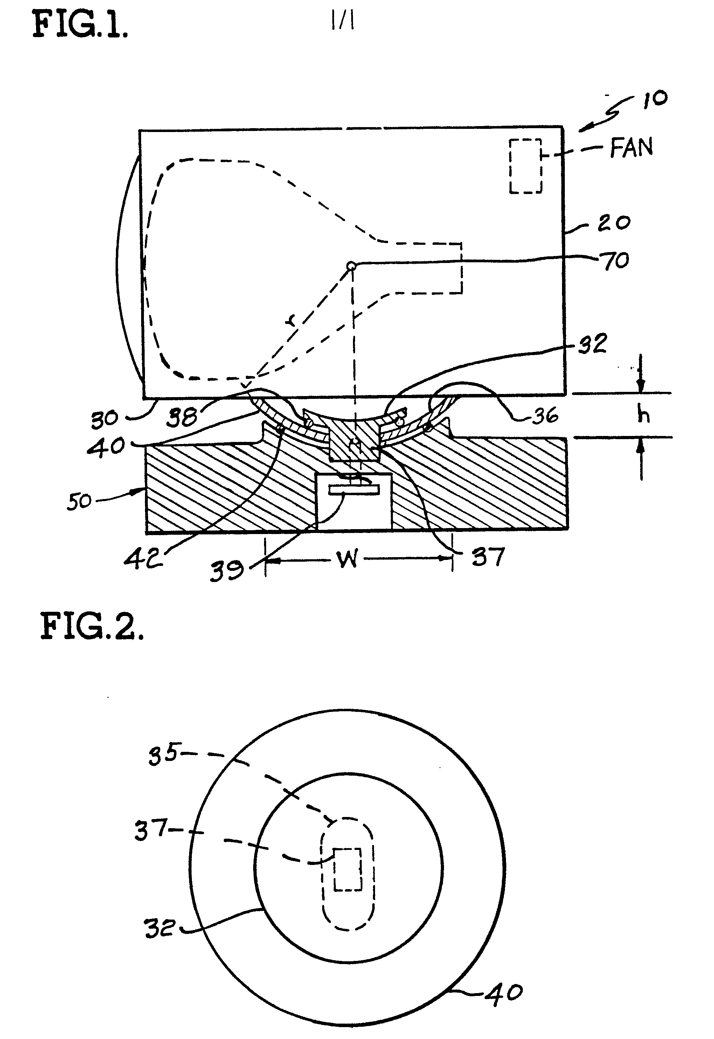

The base 30 of the cabinet is provided with an integral spherical section 40 which extends downwardly therefrom, and it is supported on a pedestal 50 which has a concave recess 52 to receive the spherical section. The cabinet is coupled to the pedestal 50 by means of a support mechanism which permits the cabinet to tilt and swivel. In one arrangement, this support mechanism includes a shoe 32 in the form of a disk seated on the inner surface 36 of the spherical section and having a post or key 37 which extends downwardly therefrom through a slot 35 (Fig. 2) in the spherical section, and it is secured to the pedestal by means of a screw 39. An 0-ring 38 is provided between the shoe 32 and the spherical section, and a second 0-ring 42 is provided between the spherical section and the pedestal 50.

The spherical section 40 and pedestal 50 are designed and coupled together so that the cabinet can swivel and tilt on the pedestal, with the slot in the spherical section guiding the tilt. The arrangement permits swiveling through a large angle ($90^{\circ}$) and tilting through an angle of about $25^{\circ}$ or so.

In designing the terminal so that it can be tilted safely through the desired angle without auxiliary supports such as springs or excessive frictional contact, the spherical section 40 is positioned in the base 30 so that the cabinet is always stable as it is tilted through the desired angles. According to the invention, this is accomplished by designing the center of rotation to coincide with the center of gravity. This is done by first determining, by well known computations, the center of gravity of the cabinet and its contents in X, Y, and Z directions. This point, namely, the center of gravity, provides a point location 70 in space within the cabinet, and the center of rotation of the cabinet is located at this point.

Knowing the center of rotation, the radius "r" and the actual size of the spherical section 40 are determined by the angles through which the cabinet is to tilt and the clearance between the cabinet and the pedestal 50.

The width "w" of the pedestal 50 is determined using the stability criteria, and the height "h" of the space between the base of the cabinet and the top of pedestal 50 is determined by the angle through which the cabinet is to tilt. Another factor is the location desired for the center of the terminal screen to lie above the pedestal 50, the desired distance being determined by operator comfort. Aesthetics may also be a factor in the design.

0170055

What is claimed is:

1.     A data display terminal comprising

a cabinet having a base and containing a cathode ray tube and various other electronic circuit apparatus and mechanical apparatus; and

a spherical section formed in said base and positioned with its center at the center of gravity of said cabinet.

2.     A terminal assembly comprising

a cabinet having a base and containing a cathode ray tube, circuit boards and miscellaneous hardware;

a spherical section formed in the base of said cabinet and projecting therefrom, said spherical section being positioned so that the center of the sphere of which the spherical section is derived coincides with the center of gravity of the cabinet and its contents; and

a concave support on which said spherical section is mounted so that the cabinet can tilt and swivel.

FIG.1.

FIG.2.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 041 804 (OLIVETTI) * Page 4, lines 5-21; figure 6 * | 1,2 | F 16 M 11/14 G 06 F 1/00 |
| X | EP-A-0 077 181 (CONVERGENT TECHNOLOGIES) * Page 18, lines 8-23; figures 4a,b,c * | 1,2 | |
| A | IBM TECHNICAL DISCLOSURE BULLETIN, vol. 23, no. 7A, December 1980, pages 2859-2860, New York, US; S.FUTATSUGI et al.: "Swivel and tilt mechanism for display unit" | 1,2 | |
| A | US-A-4 415 136 (KNOLL) | | |
| A | GB-A-2 096 234 (MOULDMAKING DESIGN) | | |

TECHNICAL FIELDS SEARCHED (Int. Cl 4)

F 16 M
G 06 F

The present search report has been drawn up for all claims

| Place of search THE HAGUE | Date of completion of the search 03-10-1985 | Examiner BARON C. |
|---|---|---|